(19) Europäisches Patentamt
European Patent Office
Office européen des brevets

(11) EP 3 317 988 B1

(12) # EUROPEAN PATENT SPECIFICATION

(45) Date of publication and mention of the grant of the patent:
**11.03.2020 Bulletin 2020/11**

(21) Application number: **15753675.6**

(22) Date of filing: **19.08.2015**

(51) Int Cl.:
***H04L 1/00*** (2006.01) ***H04L 25/02*** (2006.01)

(86) International application number:
**PCT/EP2015/069057**

(87) International publication number:
**WO 2017/028917 (23.02.2017 Gazette 2017/08)**

(54) **DETERMINING PACKET-LENGTH OF WIRELESS-LOCAL-AREA-NETWORK-COMMUNICATION BASED ON THE SPEED OF THE USER EQUIPMENT**

BESTIMMUNG DER PAKETLÄNGE VON WLAN-KOMMUNIKATION IN ABHÄNGIGKEIT VON DER GESCHWINDIGKEIT DES BENUTZERGERÄTS

DÉTERMINATION D'UNE LONGUEUR DE PAQUET D'UNE COMMUNICATION SUR UN RÉSEAU LOCAL SANS FIL, D'APRÈS LA VITESSE DE L'ÉQUIPEMENT D'UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.05.2018 Bulletin 2018/19**

(73) Proprietor: **Huawei Technologies Co., Ltd.**
**Longgang District**
**Shenzhen, Guangdong 518129 (CN)**

(72) Inventors:
- **REZNIC, Zvi**
  **80992 Munich (DE)**
- **EZRI, Doron**
  **80992 Munich (DE)**
- **WEITZMAN, Avi**
  **80992 Munich (DE)**
- **KLAUSNER, Ohad**
  **80992 Munich (DE)**
- **SUN, Fuqing**
  **80992 Munich (DE)**
- **RUAN, Wei**
  **80992 Munich (DE)**
- **FAN, Ronghu**
  **80992 Munich (DE)**

(74) Representative: **Maiwald Patent- und Rechtsanwaltsgesellschaft mbH**
**Elisenhof**
**Elisenstraße 3**
**80335 München (DE)**

(56) References cited:
**EP-A2- 2 315 362 JP-A- 2010 081 179**

- **SILVENNOINEN A ET AL: "The Effect of Terminal Movement to the Physical Layer Performance of the Ieee 802.11B Wireless Lan Systems in Simulated Umts Vehicular Channel", MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, PISCATAWAY, NJ, USA, 17 October 2005 (2005-10-17), pages 1-6, XP010901437, DOI: 10.1109/MILCOM.2005.1605937 ISBN: 978-0-7803-9393-6**
- **KAZUHIRO YAMADA ET AL: "A Communication System with a Fast Handover under a High Speed Mobile Environment", VEHICULAR TECHNOLOGY CONFERENCE FALL (VTC 2010-FALL), 2010 IEEE 72ND, IEEE, PISCATAWAY, NJ, USA, 6 September 2010 (2010-09-06), pages 1-5, XP031770531, ISBN: 978-1-4244-3573-9**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 317 988 B1

## Description

### TECHNICAL FIELD

The present application relates to the field of Doppler spread estimation for Wireless-Local-Area-Network-Communication, abbreviated WLAN-communication. In particular, the present application relates to a system and a method system for WLAN-communication to a station, in particular to a vehicle.

### BACKGROUND

End users would like to connect to the internet via WLAN, while traveling, for example, in fast moving cars on highways, for instance travelling with a speed of 120 km/h. However, WLAN protocols are developed to match the channel characteristic of indoor environment, and in particular, the channel model that was used assumes that the velocities of the receiving station and the transmitting stations are relatively low, for instance in the range of waling speed, e.g. 7 km/h.

In cars on highways, the client station moves at high velocity, for instance 120 km/h, which creates the problem of additional disturbances such as "Doppler Spread".

EP 2 315 362 A2 discloses a method to determine a IEEE 802.11 mode as a function of the channel characteristics (SIR, Error Rate, mobility). Especially, the packet length is compared to the coherence time. If the packet length is less than the coherence time, packets are aggregated, whereas if the packet length is more than the coherence time, packets are fragmented.

JP 2010 081179 A discloses a method to adapt the frame length to the speed of a vehicle.

The article by SILVENNOINEN A ET AL, titled "The Effect of Terminal Movement to the Physical Layer Performance of the IEEE 802.11B Wireless LAN Systems in Simulated UMTS Vehicular Channel", published on MILITARY COMMUNICATIONS CONFERENCE, IEEE Milcom 2005, Atlantic City, USA, 17-20 Octobre 2005, pages 1-6, shows that the coherence time is related to the mobile speed and explains that the frame duration should be less than the coherence time.

The article by KAZUHIRO YAMADA ET AL, titled "A Communication System with a Fast Handover under a High Speed Mobile Environment", published on VEHICULAR TECHNOLOGY CONFERENCE FALL (VTC 2010-FALL), 2010 IEEE, pages 1 - 5, shows that directional antennas should be used along railways.

### SUMMARY AND DESCRIPTION

It is an object of the present invention to improve WLAN-communication.

This object is achieved by the subject matter of the independent claims. Further embodiments are apparent from the dependent claims, the description, and the figures.

According to the invention, a device for WLAN communication to a station is configured to determine a disturbance of the WLAN-communication. The station can be in particular are vehicle, a bike, a car, a lorry or any other moving vessel. The step of determining the disturbance can be in particular a measuring of the disturbance, an estimating of the disturbance, and/or a receiving of information on the disturbance. The disturbance is in particular a Doppler spread. Furthermore, the device is configured to define a packet-length of the WLAN-communication, whereas the packet-length is defined based on the determined disturbance.

The term "disturbance" comprises any disturbance that can deteriorate a WLAN-communication with changing environments or changing communication channel, in particular a Doppler spread. The term "Doppler spread" as used in the present invention may be defined as a quantity or a measure of the spectral broadening of any frequency transmitted based on the time rate of a change of a mobile radio channel. In other words, the term "Doppler spread" may be defined as the range of frequencies over which the received and by the relative motion of sender and receiver induced Doppler spectrum is essentially non-zero.

Therefore, the present invention advantageously provides a communication device which adapts a packet length according to the severity, or the estimated severity, of the disturbance, in particular a Doppler spread. In other words, as the Doppler spread in particular - or the disturbance in general - becomes more severe, the system will shorten the packets. Since the channel changes over time, short packets are more robust to the changes of the channel. In particular, the effect of the disturbance, in particular of the Doppler spread, will be tolerable if the communication time of a packet is negligible relative to the fading process cycle time T.

According to the invention, the device comprises at least one directional antenna. This provides the effect that the data transmitted is emitted and/or received with greater power in specific directions allowing for increased performance and reduced interference from unwanted sources. This advantageously provides that when the station, for instance located in a vehicle, will be far away - for instance 100 m or 300 m or 800 m - from the device, for instance a stationary access point, the vehicle may be positioned in the center of the directional antenna beam, and thus the station will have high gain vs. the reflections.

According to the invention, the device is configured to determine the disturbance of the WLAN-communication based on an angle between the station and a main-emission direction of the directional antenna of the device. This provides the effect that the disturbances are calculated with high accuracy based on geometric parameters. This advantageously provides an improved determination of the disturbance of the WLAN-communication based on geometrical parameters which are easily accessible.

In a possible implementation form of the device according to the first aspect as such or according to the any of the preceding implementation forms of the first aspect, the device is configured to select the directional antenna of the device among a plurality of directional antennas of the device, in particular, based on a signal strength of the signal as received from the station. This provides the effect of static beamforming using multiple directional antennas. This advantageously provides that if, for instance, the station will move out of the center of the directional antenna currently used for wireless data transmission, and therefore the transmitted signal will be attenuated, a further directional antenna will be used, for which the station is currently located in the center of antenna gain, e.g. the area of increased performance.

According to the invention, the device is configured to determine at which position the station is relative to the main emission direction of the directional antenna, in particular:

- if the station is within a high-gain or low-gain area of the directional antenna; and/or
- if the station is within a threshold distance to the main emission direction.

This provides the advantage that in downlink communication only the directional antenna of the plurality of directional antennas are used by the device that are optimal with respect to the relative position of the station. This provides the effect of an adaptation of the used signal power for data transmission during directional antenna operation. This advantageously provides an improved performance of the WLAN-communication.

In a possible implementation form of the device according to the first aspect as such or according to the any of the preceding implementation forms of the first aspect, the device is configured to determine the disturbance based on a distance of the station to the device, wherein, in particular, the distance is based on a time period and/or on a packet error rate. This provides the effect that the disturbances are calculated with high accuracy based on geometric parameters. This advantageously provides an improved determination of the disturbance of the WLAN-communication based on geometrical parameters which are easily accessible. The time period may refer to a time period which starts when the station is located within a data transmission range of the device, i.e. the station is observable by the device. For instance, a direct mapping from distance to packet-length may be used, e.g. the defined packet-length of the WLAN-communication is based on the distance between the device and the station, since the disturbance may be correlated to the distance. In one approximation, the disturbance may be linearly correlated to the distance.

In a possible implementation form of the device according to the first aspect as such or according to any of the preceding implementation forms of the first aspect, the device is configured to determine the disturbance based on the received signal strength. This provides the effect that the determination of the disturbance is simplified. This advantageously provides an adjusted and an improved performance of the WLAN-communication.

In a possible implementation form of the device according to the first aspect as such or according to any of the preceding implementation forms of the first aspect, the device is configured to define the packet-length based on different maximum packet-lengths. This provides the effect that the defining or determination of the packet-length is simplified. The device can define the packet-length based on the disturbance, by selecting amongst a finite number, e.g. three, of different packet-lengths. This advantageously provides an improved performance of the WLAN-communication.

In a possible implementation form of the device according to the preceding implementation form, the device is configured to assign at least one maximum packet-length to a range of the disturbance or to a range of a quantity, in particular a distance which correlates to the range of the disturbance. This provides the effect that a mapping between the disturbance and the packet-length is simplified.This advantageously provides an improved performance of the WLAN-communication.

In a possible implementation form of the device according to the first aspect as such or according to any of the preceding implementation forms of the first aspect, the device is an access point configured to communicate with one or more clients. In this case the station is a client.

In a possible implementation form that is based on the preceding implementation form, wherein the device is configured to be an access point, the device is arranged at a facility along a road, in particular a bridge, an antenna pole, or road side pole. The device may be configured and arranged such that a line-of sight can be established to as many stations or many vehicles as possible.

In a possible implementation form of the device according to the first aspect as such or according to any of the preceding implementation forms of the first aspect, the device is a client configured to communicate with an access point. In this case the station is an access point. The station can be static, and therefore in particular arranged alongside a road. Alternatively the station can be a vehicle or any other moving vessel.

According to a second aspect, the present invention relates to a method for communication in a WLAN-network configured to operate a device according to the first aspect as such or according to any of the preceding implementation forms of the first aspect.

In a first possible implementation form of the method according to the second aspect, the method comprises the following steps:

- determining a disturbance of the WLAN-communication, in particular a Doppler spread; and
- defining a packet-length of the WLAN-communication.

According to a third aspect, the invention relates to computer program configured to operate a method according to the second aspect as such or according to any of the preceding implementation forms of the second aspect, when executed on a computer.

The methods, systems and devices described herein may be implemented as software in a Digital Signal Processor, DSP, in a micro-controller or in any other side-processor or as hardware circuit within an application specific integrated circuit, ASIC or in a field-programmable gate array which is an integrated circuit designed to be configured by a customer or a designer after manufacturing - hence "field-programmable".

The invention can be implemented in digital electronic circuitry, or in computer hardware, firmware, software, or in combinations thereof, e.g. in available hardware of conventional mobile devices or in new hardware dedicated for processing the methods described herein.

These and other aspects of the present invention will become apparent from and be elucidated with reference to the embodiments described hereinafter. A more complete appreciation of the present invention and the attendant advantages thereof will be more clearly understood with reference to the following schematic drawings.

## BRIEF DESCRIPTION OF THE DRAWINGS

Further embodiments of the invention will be described with respect to the following figures, in which:

Fig. 1 shows a schematic diagram of a client station moving at high velocity for explaining the Doppler Spread according to one embodiment of the present invention;

Fig. 2 shows a schematic diagram of a diagram with a magnitude plot of a fading process according to an embodiment of the present invention;

Fig. 3 shows a schematic diagram of a diagram with a throughput plot as a function of a distance, as a measure of the disturbance, according to an embodiment of the present invention;

Fig. 4 shows a schematic diagram of a diagram with an efficiency plot of as a function of packet-length for explaining the present invention;

Fig. 5 shows a schematic diagram of a device and a station performing WLAN-communication to according to one embodiment of the present invention;

Fig. 6 shows a schematic diagram of a device for WLAN-communication and a station according to one embodiment of the present invention;

Fig. 7 shows a schematic diagram of a device for WLAN-communication and a station according to one embodiment of the present invention; and

Fig. 8 shows a schematic diagram of a flowchart diagram of a method for communication in a WLAN-network configured to operate a device for WLAN-communication to a station according to one embodiment of the present invention.

## DETAILED DESCRIPTION OF EMBODIMENTS OF THE INVENTION

In the associated figures, identical reference signs denote identical or at least equivalent elements, parts, units or steps. In addition, it should be noted that all of the accompanying drawings are not to scale.

The technical solutions in the embodiments of the present invention are described clearly and completely in the following with detailed reference to the accompanying drawings in the embodiments of the present invention.

The present invention can advantageously provide a reduction of the overall packet error rate caused by the Doppler spread.

The present invention may advantageously provide an estimation of the distance between the client and the access point AP. If the distance is high, for instance higher than 80 m or higher than 100 m, the device is configured to determine that the client is in a high gain area and has high LOS-to-Reflection ratio, and if the distance is low, for instance lower than 80 m or lower than 50 m, the device is configured to determine that the client is in the low gain area - lower gain than the high gain area and has low LOS-to-Reflection ratio.

The term "high gain area" as used by the present invention may be defined as an area with a gain of higher than 2.15 dBi. A low gain area may be defined as an area with a gain of lower than 2.15 dBi.

Fig. 1 shows a schematic diagram of a client station moving at high velocity for explaining the Doppler Spread according to one embodiment of the present invention.

The signal from a moving station 200 on a fast moving train FMT arrives at the access point AP for instance in form of the device 100 with frequency shift - the "Doppler frequency" which we denote as $\Delta f_1$. The Doppler frequency may depend linearly on the speed $v$ of the car or the moving station 200, projected on the line connecting the car and the access point AP in form of the device 100. Additionally, the signal from the moving station 200 arrives at the device 100 after being reflected from reflecting objects denoted as scatterers SC.

The reflected signal visualized by the dashed line arrives with a different Doppler frequency, which we denote as $\Delta f_2$, which depends linearly on the speed of the car, projected on the line connecting the car and the reflecting object. The difference $\Delta f_1 - \Delta f_2$ between the two Doppler frequencies is the Doppler Spread.

We shall now explain why the Doppler Spread creates a problem for Wi-Fi. For the case of a single reflection, the signal y(t) which arrives at the receiver is the sum of the two paths, as follow:

$$y(t) = a_1 x(t) e^{j2\pi\Delta f_1 t} + a_2 x(t) e^{j2\pi\Delta f_2 t}$$
$$= x(t)\left[a_1 e^{j2\pi\Delta f_1 t} + a_2 e^{j2\pi\Delta f_2 t}\right].$$

This means that the Doppler Spread creates a time-varying channel. However, in Wi-Fi, there are no pilots for tracking the channel during the packets, so Wi-Fi receiver cannot track the changes along the packet transmission time.

Fig. 2 shows a schematic diagram of a diagram with a magnitude plot of a fading process according to an embodiment of the present invention. The y-axis shows the channel magnitude, the x-axis depicts the time t in μs. Since the channel changes over time, short packets are more immune to the changes on the channel. In particular, the effect of the Doppler spread will be tolerable if the packet time will be negligible relative to the fading process cycle time *T,* where $T = (|\Delta f_1 - \Delta f_2|)^{-1}$. The fading process cycle time is illustrated in Fig. 2.

While short packets are more immune to Doppler spread, they are less efficient in terms of overhead. Hence, it is desirable provide solution that will combine the efficiency of long packets with the immunity to Doppler spread of the short packets.

According to an exemplary embodiment of the present invention, the access points are installed along the highway on high poles, to ensure line-of-sight between the cars comprising moving stations 200 and the access point comprising the device 100.

According to an exemplary embodiment of the present invention, multiple directional antennas located on or coupled to the access points AP or the devices 100 in the directions of the highway may be installed. Then when the car with the station 200 will be far - for instance more than 80 m - away from the device 100, the station 200 will be in the center of the directional antenna beam of the device 100, and thus it will have high gain vs. the reflections, which will be attenuated (on average) by the antenna.

However, when the car with the station 200 will be close to the device 100 - for instance less than 80 m -, the station 200 will move out of the center of the directional antenna assuming that the antenna is on the side of the road, and not on the road itself, and therefore the desired signal will be attenuated. The device 100 is configured to switch to another directional antenna directed to the station 200.

According to an exemplary embodiment of the present invention, the device 100 is configured to determine if the client is located to the left or to the right of the access point AP, and in the downlink transmission, use only the antennas that are facing that direction.

According to an exemplary embodiment of the present invention, the device 100 is configured to estimate the severity of the Doppler spread problem, by estimating the client azimuth vs. the directional antenna azimuth. The client azimuth is estimated from the estimate of the distance between the car comprising the station 200 and the access point AP in form of the device 100.

According to an exemplary embodiment of the present invention, the device 100 is configured to limit the length of the packets to be below a certain MAX Length value, and adjust the value of MAX_Length as a function of the distance between the car comprising the station 200 and the access point AP in form of the device 100.

According to an exemplary embodiment of the present invention, the device 100 is configured to estimate a distance between the client, for instance, the car comprising the station 200 and the AP in form of the device 100. Based on the determined distance, the device 100 is configured to conclude a client azimuth. Based on the determined client azimuth, the device 100 is configured to conclude a Doppler spread severity. Based on the determined Doppler spread severity, the device 100 is configured to limit a packet length as a function of client distance. This will advantageously reduce the Packet Error Rate caused by the Doppler spread.

Fig. 3 shows a schematic diagram of a diagram with a throughput plot of as a function of a distance according to an embodiment of the present invention.

Fig. 3 shows the throughput as a function of distance from the car to the access point AP. In this case the car (station) is driving at 120 km/h and the access point AP (the claimed device) is using a directional antenna (1 spatial stream, 20 MHz, MCS 7, CP=1/4).

The solid, dotted, and dot-dashed lines relate to different packet-lengths of 5000 bytes, 2000 bytes, and 750 bytes each.. Each line represents the throughput (in Mbps) as function over distance between car and access point AP (in meters) for each of the different packet-lengths used for data transmission. At high distance, the station is inside the beam and the disturbance, in particular the Doppler spread, is low. Therefore the packet error rate, PER, is low. In that case, longer packets are more efficient and yield better throughput. For short distances, the PER of the longer packets is larger than the PER of shorter packets. As a result, shorter packets yield better throughput. The device 100, in this embodiment, is configured to adapt the packet-length, by selecting among the three different packet-lengths, depending on the distance such that a maximal throughput is achieved over the entire distance range. Alternatively or additionally, the device can also be configured to adapt the packet-length according to another measure of the disturbance, distance is only one alternative. Other alternatives are received signal strength, signal-to-noise-ratio, and the like. The dashed black line represents the throughput of the device 100. The line forms the upper envelope of the three curves relating to the three different packet-lengths.

According to an exemplary embodiment of the present invention, the access point AP will have multiple directional antennas, for example one facing left and one facing right. At any given time, each station will be located either to the right of the access point AP or to the left of the access point AP. We would like to serve each car with the suitable antenna in each instant of time.

Denote by $l$ the client number. Denote by $RSSI_{Left}(l)$ and $RSSI_{Right}(l)$ the Received Signal Strength Indication (RSSI) of the packets arriving from client $l$ at access point AP antennas facing left and right respectively.

We shall decide to communicated with client $l$ via the antennas facing left if:

$$(1)\ RSSI_{Left}(l) - RSSI_{Left,ref}(l) > RSSI_{Right}(l) - RSSI_{Right,ref}(l),$$

where,

$$RSSI_{Left,ref}(l) = 10 \cdot \log_{10}(N-M+1)^{-1} \sum_{k=M}^{N} 10^{RSSI_{Left,peak}(l-k)/10}\ ,$$

and

$$RSSI_{Right,ref}(l) = 10 \cdot \log_{10}(N-M+1)^{-1} \sum_{k=M}^{N} 10^{RSSI_{Right,peak}(l-k)/10},$$

where $RSSI_{Left,peak}(k)$ and $RSSI_{Right,peak}(k)$ are the highest value of RSSI that was measured at the antennas facing left and right, respectively, from client $k$, $N$ is a large constant (e.g. $N$ = 1000), and $M$ is constant sufficiently large to ensure that for any $l$ > M, by the time client $l$ arrives at the cell, the values of $RSSI_{Left,peak}$ ($l$ - $k$) and $RSSI_{Right,peak}(l-k)$ are already known.

If the condition of (1) is not met, we shall communicate with client $l$ via the antennas facing right.

Fig. 4 shows a schematic diagram of a diagram with an efficiency plot of as a function of packet length for explaining the present invention.

MAC efficiency strongly depends on the packet length. This can be observed in Fig. 4, (1 spatial stream, 20 MHz, MCS 7, CP=1/4, PER=10%). For packet length of 750 bytes the efficiency is only 21%, whereas for packet length of 5000 bytes, the efficiency improves to 61%.

Fig. 5 shows a schematic diagram of a device and a station performing WLAN-communication to according to one embodiment of the present invention.

A device 100 for WLAN-communication to a station 200 may comprise a determination module 110 and packet length controlling module 120.

The station 200 may be installed on a vehicle or any other moving entity.

The device 100 is configured to determine a disturbance of the WLAN-communication, in particular a Doppler spread.

According to an exemplary embodiment of the present invention, the determination module 110 is configured to determine a disturbance of the WLAN-communication, in particular a Doppler spread.

The device 100 is configured to define a packet-length of the WLAN-communication based on the disturbance.

According to an exemplary embodiment of the present invention, the packet length controlling module 120 is configured to define a packet-length of the WLAN-communication based on the disturbance.

According to an exemplary embodiment of the present invention, the device 100 and the station 200 may establish a WLAN-network. The device 100 and the station 200 may be configured to perform a bilateral communication between the device 100 and the station 200.

The Doppler spread of a channel in a WLAN-network may be estimated by making use of continual pilots that are transmitted on a channel. The Doppler spread of a channel can be estimated using an arbitrary continual pilot. Further, the Doppler spread can be measured using a power spectrum analysis or a coherence time examination. The Doppler spread of a channel in a WLAN-network may be measured using probing signals to be transmitted in addition to information-bearing signals each time the channel changes significantly.

Fig. 6 shows a schematic diagram of a device for WLAN-communication and a station according to one embodiment of the present invention.

The directional antenna applies high gain to an angle as shown in Fig. 6 while attenuating other angles. Suppose for simplicity that the directional antenna applies high gain to a beam of width $\alpha$, and low gain to all directions outside the beam. Some reflectors will be located so that the path from the access point AP to the reflector is inside the antenna beam, but most reflectors will be located such that the path from the access point AP to the reflector is outside the antenna beam. Assuming that the azimuth from the access point AP in form of the device 100 to the reflecting object or scatterer SC is uniformly distributed between 0 to 360 degrees, the probability that the reflection will have high gain is given by:

$$P\left(\text{high gain}\right) = \alpha^\circ / 360^\circ \ll 1.$$

Wi-Fi systems are sensitive to Doppler spread, since Wi-Fi Doppler spread creates a time-varying channel. Wi-Fi systems lack dedicated pilots for tracking the changes. The Doppler spread is created by the reflections from objects. Hence, the receiver located on the station 200 performance will depend on the ratio between the power of the LOS (Line-of-Sight) component, and the total received power of all the reflecting signals. But in turn, this ratio depends on the location of the car: when the car is far, it is inside the beam, and when it is close, it is outside the beam. Hence the Doppler spread severity depends on the car distance.

Regarding reflections, if the client is in the high gain area, the reflections are mostly attenuated, if the client is in the low gain area, the reflections mostly attenuated.

Regarding the LOS component power, if the client is in the high gain area, the LOS component power is increased, if the client is in the low gain area, the LOS component power is attenuated.

Regarding the LOS to reflections ratio, if the client is in the high gain area, the LOS to reflections ratio is high, if the client is in the low gain area, the LOS to reflections ratio is low.

According to an exemplary embodiment of the present invention, the device 100 is configured to estimate distance between the client and the access point AP. If the distance is high for instance above 80 m, the device 100 is configured to conclude that the client is in the high gain area and has high LOS-to-Reflection ratio. In that case, the device 100 is configured to allow the packets to be long (e.g. the device 100 is configured to allow packets up to 5000 bytes). If, however, the distance is low for instance lower than 20 m, the device 100 is configured to determine that the client is in the low gain area and has low LOS-to-Reflection ratio. In that case the device 100 is configured to limit to packet length (e.g. up to to 750 bytes), and thus reduce the effect of the Doppler spread.

The distance of the car or the station 200 from the access point AP in form of the device 100 can be estimated in several ways. For example:
The distance of the car or the station 200 may be estimated according to the time passed since the car entered this cell and/or according to the packet error rate of the Wi-Fi transmission.

Fig. 7 shows a schematic diagram of a device for WLAN-communication and a station according to one embodiment of the present invention; and
according to an exemplary embodiment of the present invention as shown in Fig. 7, the access point AP in form of the device 100 will be located on a pole on the side of the road. The pole height will be for instance 4 to 8 m. The access point AP in form of the device 100 will be located as close as possible to the road, so that it will maintain line-of-sight with most of the cars, forming a WLAN-network with moving cars comprising a station 200.

According to an exemplary embodiment of the present invention, each AP will be covering one direction of the highway.

According to an exemplary embodiment of the present invention, two access points AP, covering two cells, will be located on the same pole to save the pole cost. The two cells may be a) one cell is the area to the right of the access point AP and the second cell is the area to the left of the access point AP, or b) one cell in the lanes close to the access point AP and the other cell in the lanes far from the AP, where the car moves to the opposite direction.

According to an exemplary embodiment of the present invention, the access point AP will have two or three high gain antennas, for instance with at least 27 dBi gain at 2.4 GHz.

According to an exemplary embodiment of the present invention, the access point AP will support both 2.4 GHz and 5 GHz, with high gain antennas in both frequencies.

According to an exemplary embodiment of the present invention, the user will be sitting next to the driver, holding his smartphone in front of him and surfing the internet. In that case, there is a good probability that there will be a line-of-sight between the smartphone antenna and the access point antenna.

According to an exemplary embodiment of the present invention, the user will seat the back seat, holding his smartphone in front of him and surfing the internet. In that case, there is a good probability that there will not be a line-of-sight between the smartphone antenna and the access point antenna.

Fig. 8 shows a schematic diagram of a flowchart diagram of a method for communication in a WLAN-network configured to operate a device for WLAN-communication to a station according to one embodiment of the present invention.

As a first step of the method, determining S1 a disturbance of the WLAN-communication, in particular a Doppler spread may be performed.

As a second step of the method, defining S2 a packet-length of the WLAN-communication based on the disturbance may be performed.

From the foregoing, it will be apparent to those skilled in the art that a variety of methods, systems, computer programs on recording media, and the like, are provided.

The present disclosure also supports a computer program product including computer executable code or computer executable instructions that, when executed, causes at least one computer to execute the performing and computing steps described herein.

Many alternatives, modifications, and variations will be apparent to those skilled in the art in light of the above teachings. Of course, those skilled in the art readily recognize that there are numerous applications of the invention beyond those described herein.

While the present invention has been described with reference to one or more particular embodiments, those skilled in the art recognize that many changes may be made thereto without departing from the scope of the present invention. It is therefore to be understood that within the scope of the appended claims and their equivalents, the inventions may be practiced otherwise than as specifically described herein.

In the claims, the word "comprising" does not exclude other elements or steps, and the indefinite article "a" or "an" does not exclude a plurality. A single processor or other unit may fulfill the functions of several items recited in the claims.

The mere fact that certain measures are recited in mutually different dependent claims does not indicate that a combination of these measured cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems.

## Claims

**1.** Device (100) for Wireless-Local-Area-Network, WLAN, -communication to a station (200), installed on a vehicle or any other moving entity, wherein the device is configured to:

- determine a disturbance of the WLAN-communication, in terms of a Doppler spread; and
- define a packet-length of the WLAN-communication based on the disturbance; wherein the device comprises at least one directional antenna;

**characterized in that**:

in one alternative (i) the device (100) is configured to: determine the disturbance of the WLAN-communication based on an angle between the station and a main-emission direction of the directional antenna of the device; or
in another alternative (ii) the device (100) is configured to: determine at which position the station is relative to the main emission direction of the directional antenna, based on at least one of the two following conditions:

- if the station is within a high-gain or low-gain area of the directional antenna; and/or
- if the station is within a threshold distance to the main emission direction.

2. Device (100) according to claim 1, wherein if the device (100) is configured to:
determine the disturbance of the WLAN-communication based on the angle between the station and the main-emission direction of the directional antenna of the device, the device (100) is configured to:

- select the directional antenna of the device among a plurality of directional antennas of the device, in particular, based on a signal strength of the signal as received from the station.

3. Device (100) according to any of the preceding claims, wherein the device is configured to:

- determine the disturbance based on a distance of the station to the device,
wherein, in particular, the distance is based on a time period and/or on a packet error rate.

4. Device (100) according to any of the preceding claims, wherein the device is configured to:

- determine the disturbance based on the received signal strength.

5. Device (100) according to any of the preceding claims, wherein the device is configured to:

- define the packet-length based on different maximum packet-lengths.

6. Device (100) according to the preceding claim, wherein the device is configured to:

- assign at least one maximum packet-length to a range of the disturbance or to a range of a distance which correlates to the range of the disturbance.

7. Device (100) according to one of the preceding claims, wherein the device (100) is an access point (AP) configured to communicate with at least one client.

8. Device (100) according to the preceding claim wherein the device (100) is arranged at a facility along a road, a bridge along a road, an antenna pole along a road, or road side pole.

9. Device (100) according to one of the claims 1 to 8, wherein the device (100) is a client configured to communicate with an access point.

10. Method for communication in a WLAN-network configured to operate a device (100) according to one of the preceding claims.

11. Computer program comprising instructions which, when the program is executed by a computer, cause the computer to carry out the steps of the method of any of the preceding claims.

## Patentansprüche

1. Vorrichtung (100) für Kommunikation eines drahtlosen Nahbereichsnetzwerks, WLAN, zu einer Station (200), installiert in einem Fahrzeug oder einer anderen sich bewegenden Entität, wobei die Vorrichtung konfiguriert ist zum:

- Bestimmen einer Störung der WLAN-Kommunikation in Form einer Doppler-Verbreiterung; und
- Definieren einer Paketlänge der WLAN-Kommunikation basierend auf der Störung;
wobei die Vorrichtung mindestens eine Richtantenne umfasst;
**dadurch gekennzeichnet, dass**:

in einer Alternative (i) die Vorrichtung (100) konfiguriert ist zum:
Bestimmen der Störung der WLAN-Kommunikation basierend auf einem Winkel zwischen der Station und einer Hauptabgaberichtung der Richtantenne der Vorrichtung; oder
in einer anderen Alternative (ii) die Vorrichtung (100) konfiguriert ist zum:
Bestimmen, an welcher Position die Station relativ zu der Hauptabgaberichtung der Richtantenne ist, basierend auf mindestens einer der beiden folgenden Bedingungen:

- ob die Station sich innerhalb eines Gebiets hoher Verstärkung oder niedriger Verstärkung der Richtantenne befindet; und/oder
- ob die Station sich innerhalb einer Schwellendistanz zur der Hauptabgaberichtung befindet.

**2.** Vorrichtung (100) nach Anspruch 1, wobei, wenn die Vorrichtung (100) konfiguriert ist zum:
Bestimmen der Störung der WLAN-Kommunikation basierend auf dem Winkel zwischen der Station und der Hauptabgaberichtung der Richtantenne der Vorrichtung, die Vorrichtung (100) konfiguriert ist zum:

- Auswählen der Richtantenne der Vorrichtung aus einer Vielzahl von Richtantennen der Vorrichtung, insbesondere basierend auf einer Signalstärke des Signals, wie von der Station empfangen.

**3.** Vorrichtung (100) nach einem der vorstehenden Ansprüche, wobei die Vorrichtung konfiguriert ist zum:

- Bestimmen der Störung basierend auf einer Distanz der Station zu der Vorrichtung, wobei insbesondere die Distanz auf einer Zeitperiode und/oder einer Paketfehlerrate basiert.

**4.** Vorrichtung (100) nach einem der vorstehenden Ansprüche, wobei die Vorrichtung konfiguriert ist zum:

- Bestimmen der Störung basierend auf der empfangenen Signalstärke.

**5.** Vorrichtung (100) nach einem der vorstehenden Ansprüche, wobei die Vorrichtung konfiguriert ist zum:

- Definieren der Paketlänge basierend auf verschiedenen maximalen Paketlängen.

**6.** Vorrichtung (100) nach einem der vorstehenden Ansprüche, wobei die Vorrichtung konfiguriert ist zum:

- Zuweisen mindestens einer maximalen Paketlänge zu einem Bereich der Störung oder zu einem Bereich einer Distanz, die mit dem Bereich der Störung korreliert.

**7.** Vorrichtung (100) nach einem der vorstehenden Ansprüche, wobei die Vorrichtung (100) ein Zugangspunkt (AP) ist, konfiguriert zum Kommunizieren mit mindestens einem Client.

**8.** Vorrichtung (100) nach einem der vorstehenden Ansprüche, wobei die Vorrichtung (100) an einer Einrichtung entlang einer Straße, einer Brücke entlang einer Straße, einem Antennenmast entlang einer Straße oder einem straßenseitigen Mast angeordnet ist.

**9.** Vorrichtung (100) nach einem der Ansprüche 1 bis 8, wobei die Vorrichtung (100) ein Client ist, konfiguriert zum Kommunizieren mit einem Zugangspunkt.

**10.** Verfahren zum Kommunizieren in einem WLAN-Netzwerk, konfiguriert zum Betreiben einer Vorrichtung (100) nach einem der vorstehenden Ansprüche.

**11.** Computerprogramm, umfassend Anweisungen, die, wenn das Programm durch einen Computer ausgeführt wird, bewirken, dass der Computer die Schritte des Verfahrens nach einem der vorstehenden Ansprüche ausführt.

## Revendications

**1.** Dispositif (100) de communication en réseau local sans fil, WLAN, avec une station (200), installé sur un véhicule ou toute autre entité mobile, le dispositif étant configuré pour :

- déterminer une perturbation de la communication WLAN, en termes d'étalement Doppler ; et
- définir une longueur de paquet de la communication WLAN d'après la perturbation ; le dispositif comprenant au moins une antenne directive ;

**caractérisé en ce que** :

dans une variante (i) le dispositif (100) est configuré pour :
déterminer la perturbation de la communication WLAN d'après un angle entre la station et une direction d'émission principale de l'antenne directive du dispositif ; ou
dans une autre variante (ii) le dispositif (100) est configuré pour :
déterminer à quelle position se trouve la station par rapport à la direction d'émission principale de l'antenne directive, d'après au moins l'une des deux conditions suivantes :

- si la station est au sein d'une zone de gain élevé ou de faible gain de l'antenne directive ; et/ou
- si la station est à moins d'une distance seuil de la direction d'émission principale.

**2.** Dispositif (100) selon la revendication 1, si le dispositif (100) est configuré pour déterminer la perturbation de la communication WLAN d'après l'angle entre la station et la direction d'émission principale de l'antenne directive du dispositif, le dispositif (100) étant configuré pour :

- sélectionner l'antenne directive du dispositif parmi une pluralité d'antennes directives du dispositif, notamment, d'après une intensité de signal du signal tel qu'il est reçu en provenance de la station.

**3.** Dispositif (100) selon l'une quelconque des revendications précédentes, le dispositif étant configuré pour :

- déterminer la perturbation d'après une distance entre la station et le dispositif, la distance étant notamment basée sur une période de temps et/ou sur un taux d'erreur de paquet.

**4.** Dispositif (100) selon l'une quelconque des revendications précédentes, le dispositif étant configuré pour :

- déterminer la perturbation d'après l'intensité de signal reçu.

**5.** Dispositif (100) selon l'une quelconque des revendications précédentes, le dispositif étant configuré pour :

- définir la longueur de paquet d'après des longueurs de paquet maximales différentes.

**6.** Dispositif (100) selon la revendication précédente, le dispositif étant configuré pour :

- attribuer au moins une longueur de paquet maximale à une plage de la perturbation ou à une plage d'une distance qui se corrèle à la plage de la perturbation.

**7.** Dispositif (100) selon l'une des revendications précédentes, le dispositif (100) étant un point d'accès (AP) configuré pour communiquer avec au moins un client.

**8.** Dispositif (100) selon la revendication précédente, le dispositif (100) étant agencé au niveau d'une installation le long d'une route, d'un pont le long d'une route, d'un poteau d'antenne le long d'une route, ou d'un poteau de bord de route.

**9.** Dispositif (100) selon l'une des revendications 1 à 8, le dispositif (100) étant un client configuré pour communiquer avec un point d'accès.

**10.** Procédé de communication dans un réseau WLAN configuré pour exploiter un dispositif (100) selon l'une des revendications précédentes.

**11.** Programme d'ordinateur comprenant des instructions qui, lorsque le programme est exécuté par un ordinateur, amènent l'ordinateur à réaliser les étapes du procédé de l'une quelconque des revendications précédentes.

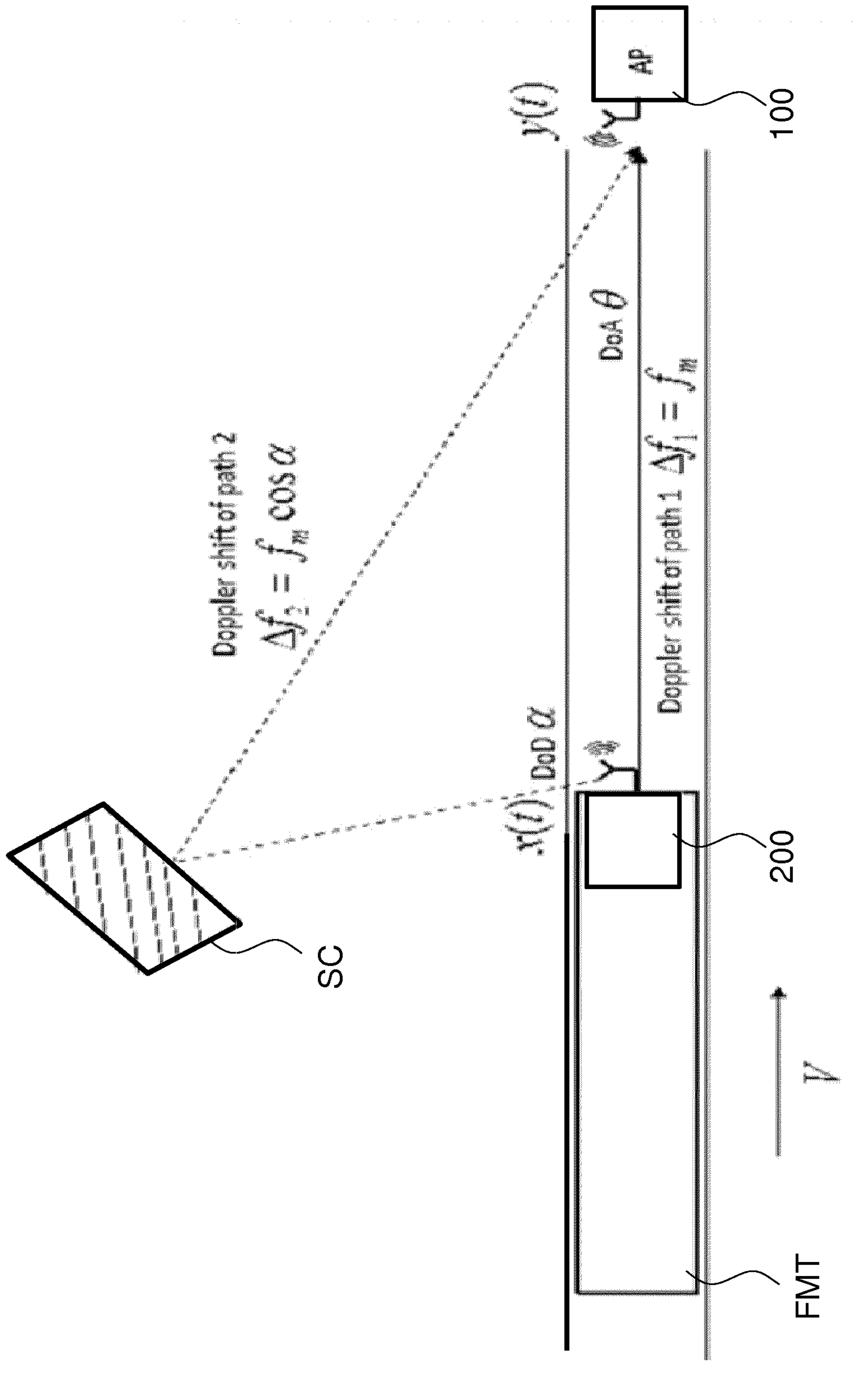
y(t)
AP
100
DoA θ
Doppler shift of path 1 $\Delta f_1 = f_m$
Doppler shift of path 2
$\Delta f_2 = f_m \cos\alpha$
DoD α
x(t)
200
SC
V
FMT

Fig. 1

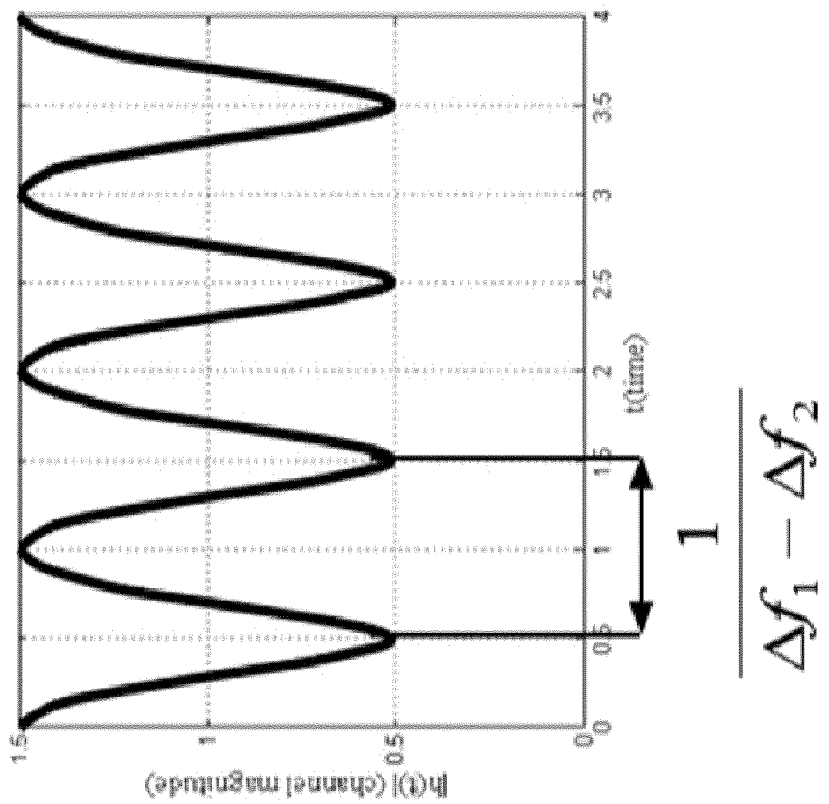
|h(t)| (channel magnitude)
t(time)
0
0.5
1
1.5
2
2.5
3
3.5
4
$\frac{1}{\Delta f_1 - \Delta f_2}$

Fig. 2

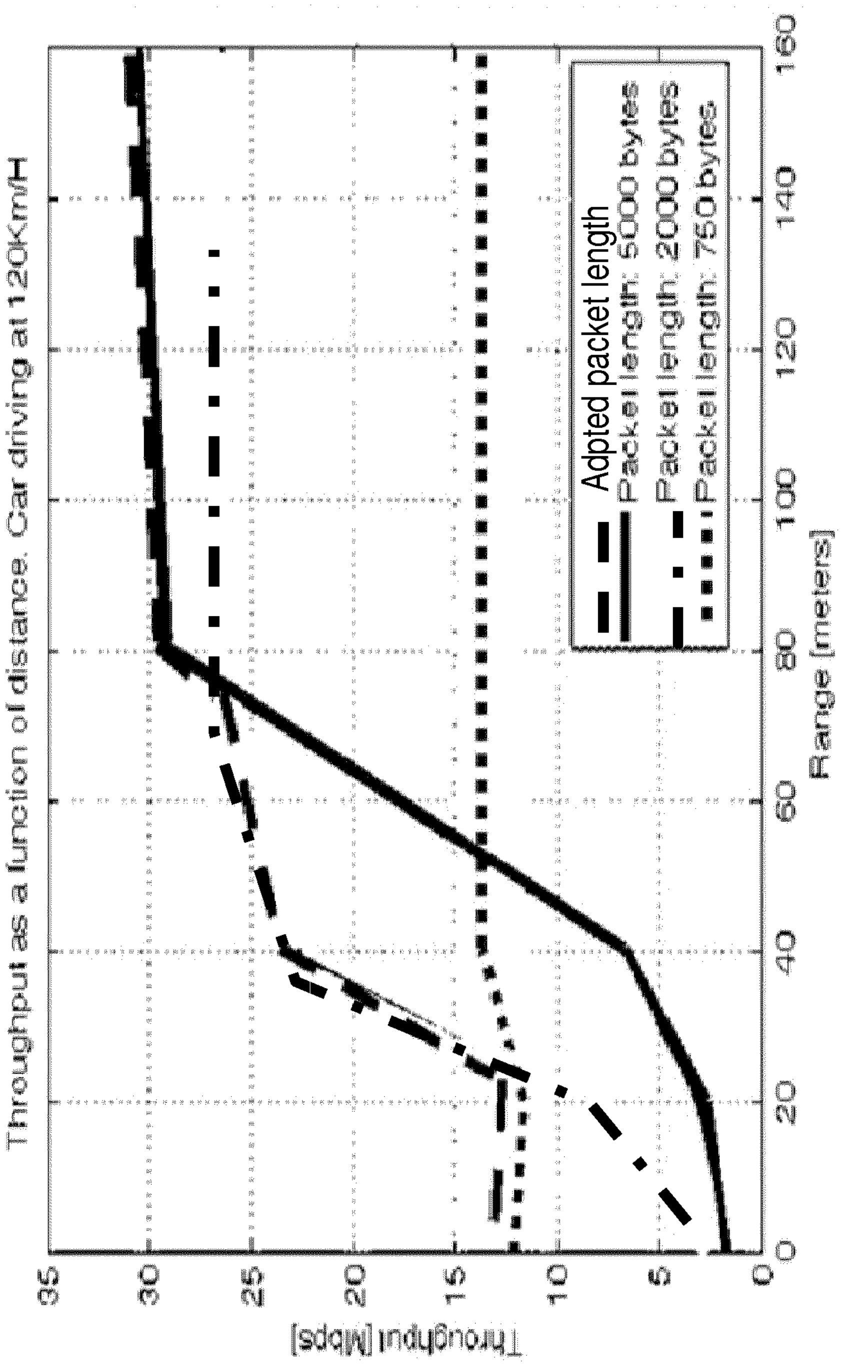
Throughput as a function of distance. Car driving at 120Km/H
Throughput [Mbps]
Range [meters]
0
5
10
15
20
25
30
35
0
20
40
60
80
100
120
140
160
Adpted packet length
Packet length: 5000 bytes
Packet length: 2000 bytes
Packet length: 750 bytes

Fig. 3

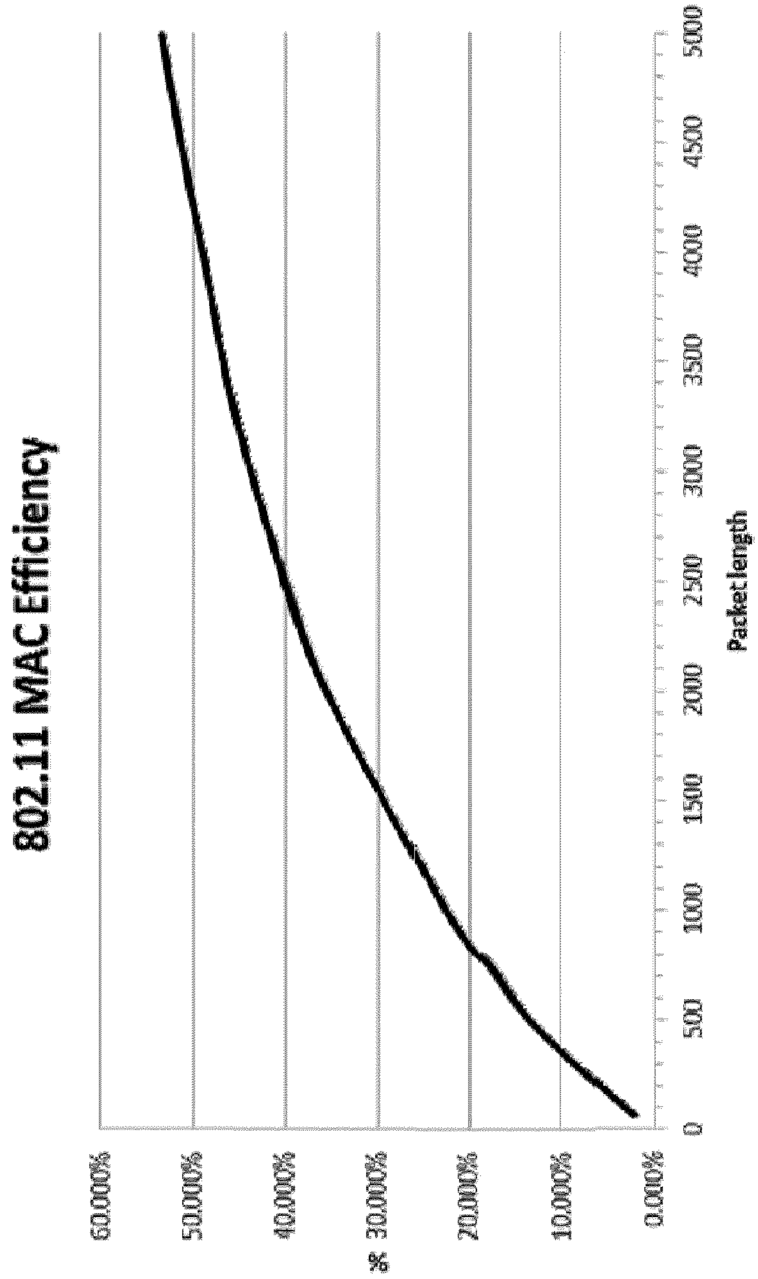
802.11 MAC Efficiency
60.000%
50.000%
40.000%
30.000%
20.000%
10.000%
0.000%
%
0
500
1000
1500
2000
2500
3000
3500
4000
4500
5000
Packet length

Fig. 4

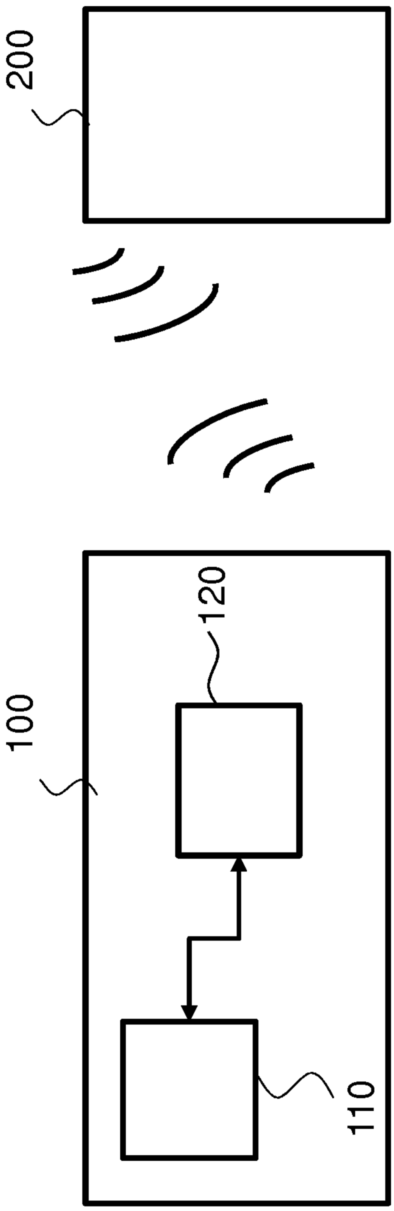


Fig. 5

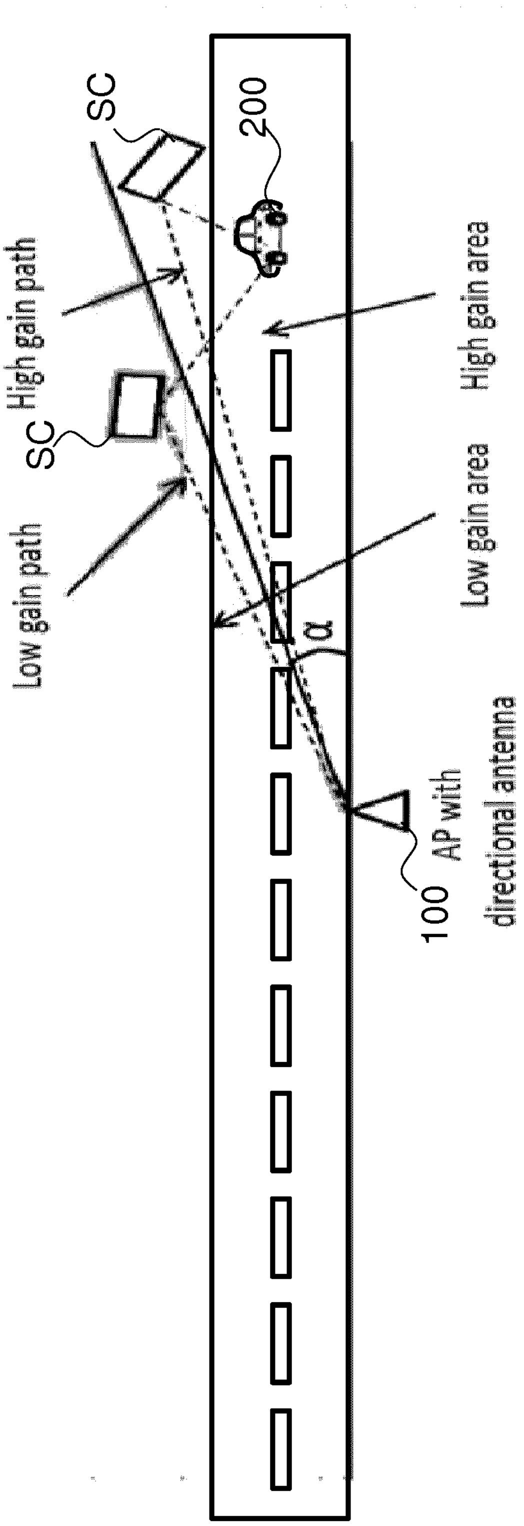
SC
200
High gain path
SC
High gain area
Low gain area
Low gain path
α
AP with
directional antenna
100

Fig. 6

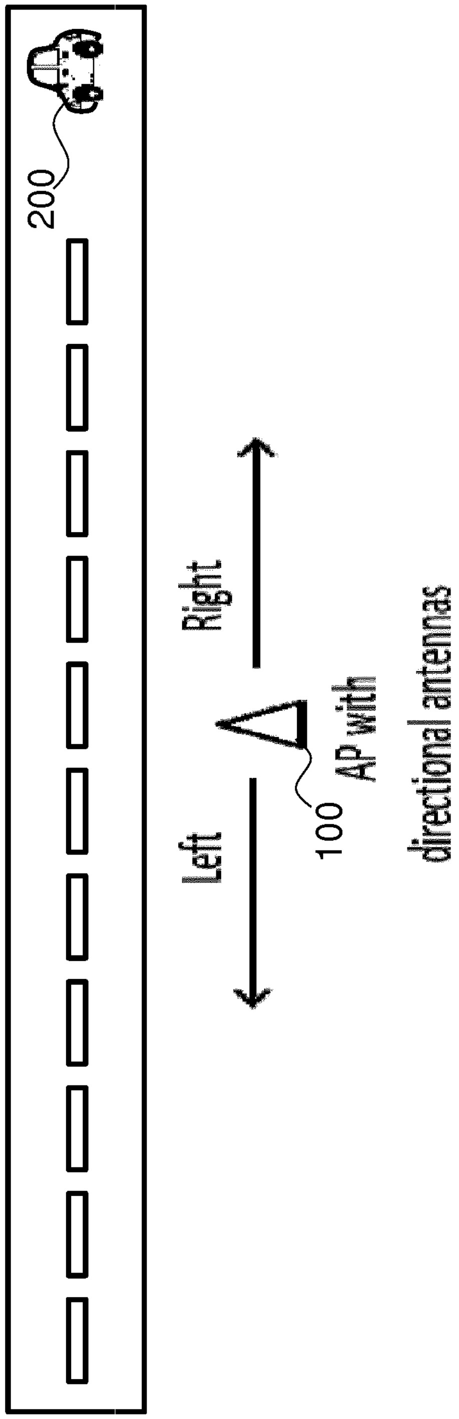


Fig. 7

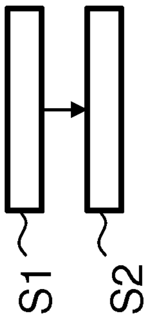


Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- EP 2315362 A2
- JP 2010081179 A

### Non-patent literature cited in the description

- The Effect of Terminal Movement to the Physical Layer Performance of the IEEE 802.11B Wireless LAN Systems in Simulated UMTS Vehicular Channel. **SILVENNOINEN A et al.** MILITARY COMMUNICATIONS CONFERENCE. IEEE, 17 October 2005, 1-6
- A Communication System with a Fast Handover under a High Speed Mobile Environment. **KAZUHIRO YAMADA et al.** VEHICULAR TECHNOLOGY CONFERENCE FALL (VTC 2010-FALL). IEEE, 2010, 1-5